# EUROPÄISCHE PATENTSCHRIFT

(11) **EP 3 233 327 B1**
(45) Veröffentlichungstag und Bekanntmachung des Hinweises auf die Patenterteilung: **17.07.2019**
(21) Anmeldenummer: 16700537.0
(22) Anmeldetag: 07.01.2016
(51) Int. Cl.: B21K 25/00, B21J 5/06, B23K 20/12

(54) **VERFAHREN ZUR HERSTELLUNG EINER ELEKTRISCHEN MASCHINE UND ELEKTRISCHE MASCHINE**
METHOD FOR MANUFACTURING AN ELECTRICAL MACHINE AND ELECTRICAL MACHINE
METHODE DE PRODUCTION D'UNE MACHINE ELECTRIQUE ET MACHINE ELECTRIQUE

(30) Priorität: 20.02.2015 EP 15155986
(43) Veröffentlichungstag der Anmeldung: 25.10.2017
(73) Patentinhaber: Siemens Aktiengesellschaft, 80333 München (DE)
(72) Erfinder: HANDWERKER, Michael, 97653 Bischofsheim (DE); BERGMANN, Jean Pierre, 99096 Erfurt (DE); SCHÜRER, René, 86415 Mering (DE); JOHANNES, Markus, 97616 Bad Neustadt (DE); SÜNNEMANN, Maximilian, 97633 Waltershausen (DE)
(86) Internationale Anmeldenummer: PCT/EP2016/050159
(87) Internationale Veröffentlichungsnummer: WO 2016/131556

(56) Entgegenhaltungen:
- EP-A1- 1 400 302
- WO-A1-2005/018865
- DE-A1-102010 026 667
- JP-A- 2010 178 589
- JP-A- 2010 178 598
- US-A- 4 134 036
- US-A1- 2014 246 882

## Beschreibung

Die Erfindung betrifft eine elektrische Maschine sowie ein Verfahren zu deren Herstellung.

Ein Gussteil ist aus der US 4,134,036 A bekannt. Das aus diesem Patent bekannte Gussteil kann aus Aluminium oder einem anderen Material hoher Festigkeit und geringem Gewicht als glockenähnliches Gussteil hergestellt werden. In vielen Fällen muss das Gussteil nach dem Gießen für die Verwendung bei einem Gerät in einem zeitlichen Abstand vom Gießen mit einer nachfolgenden Präzisionsbearbeitung in seiner Funktion erweitert werden. Die Erweiterung seiner Funktion kann darin bestehen, dass ein metallischer Funktionsbereich durch die nachfolgende Präzisionsbearbeitung eine weitere Komponente des Geräts fixieren kann. Beispielsweise ist in dem genannten Patent das Gerät eine elektrische Maschine, bei der in einem Betrieb durch Bestromen von Wicklungen eines Stators ein Rotor in Drehung versetzt wird. Die dabei auftretenden Kräfte führen zu Gegenkräften im Stator, der dabei als weitere Komponente der elektrischen Maschine in deren Gehäuse, d.h. in dem Gussteil, fixiert ist. Hierzu werden in dem Patent z.B. Längsträger an der Innenseite des Gussteils, kreisförmige Rillen und Öffnungen zum Befestigung des Gehäuses an den Rest eines Werkzeugs vorgesehen. Die Längsträger sollen mit ihren Vorsprüngen und Trägern den Stator in dem Gehäuse sichern und eine relative Drehung zwischen dem Gehäuse und dem Stator verhindern. Die Rillen können dazu verwendet werden, eine relative axiale Bewegung zwischen dem Stator und dem Gehäuse zu verhindern. In dem genannten Patent wird ausgehend von den verschiedenen Möglichkeiten, einen Stator mit dem Gehäuse zu verbinden, auch beschrieben, den Stator mit einer Presspassung in dem Gehäuse zu fixieren. Zusätzlich wird hierbei der Stator mit einer Schraubverbindung, die sich von der Außenseite des Gehäuses in den Stator erstreckt, gegen ein Verdrehen gesichert. Diese Funktionserweiterung des Gehäuses erfordert ebenfalls das nachträgliche Anbringen eines Lochs durch spanabhebende Bearbeitungen des Gehäuses, d.h. des Gussteils. Das Sichern des Stators gegen ein Verdrehen im Gehäuse ist häufig erforderlich, um die Kraft- und Drehmomentübertragung sowohl im Herstellprozess zur Positionsfixierung als auch während der Produktlebensdauer unter Einfluss von Kräften, Drehmomenten und hohen Temperaturbelastungen sicher zu gewährleisten.

Die JP 2010-178589 A, die die Basis für den Oberbegriff der Ansprüche 1 und 2 bildet, beschäftigt sich mit der Verbesserung des Wirkungsgrads einer rotierenden elektrischen Maschine. Der Wirkungsgrad wird dadurch effektiv verbessert, indem auf das Statorblechpaket eine gleichmäßige Zugspannung wirkt. Der innere Durchmesser des Gehäuses der rotierenden elektrischen Maschine und der äußere Durchmesser des Statorblechpakets haben den gleichen Wert, so dass das Statorblechpaket in das Gehäuse eingesetzt werden kann. Das Statorblechpaket weist Nuten in der axialen Richtung entlang dem Statorblechpaket an dessen Oberfläche auf. An dem Gehäuse wird mit einem rotierenden Werkzeug gerieben, so dass das Material des Gehäuses plastifiziert in die Nuten des Stators fließen kann. Dadurch wird der Stator über seine Oberfläche an dem Gehäuse an zwei oder mehr Stellen befestigt. Wird für das Gehäuse als Material eine Aluminiumlegierung verwendet, so ist es wünschenswert, dass das rotierende Werkzeug mit einer Drehzahl von 800 U/min mit einer Geschwindigkeit von 200 mm/Min in axialer Richtung entlang des Gehäuses bewegt wird. Das Gehäuse ist aus einem nicht-magnetischen Material, wie die Aluminiumlegierung, oder kann auch aus einem austentischen SUS-Material sein. Die Abkürzung SUS steht gemäß dem japanischen Industriestandard JIS für rostfreien Stahl.

Bei einem austenitischen Gefügebestandteil liegt die Bruchdehnung A₅ bei rund 40 bis 50%. Diese Werte sind z.B. in Wikipedia unter dem folgenden Link http://de.wikipedia.org/wiki/Austenit (Gef%C3%BCgebestandteil) angegeben.

Die Bruchdehnung wird in einem Zugversuch ermittelt. Der Zugversuch ist ein genormtes Standardverfahren der Werkstoffprüfung zur Bestimmung der Streckgrenze, der Zugfestigkeit, der Bruchdehnung und weiterer Werkstoffkennwerte. Der Zugversuch ist z.B. unter http://en.wikipedia.org/wiki/Tensile testing beschrieben. Die Bruchdehnung wird anhand standardisierter Proben ermittelt.

Bei stabförmigen Proben mit kreisförmigem Querschnitt findet zur Angabe der Bruchdehnung zumeist der Index 5 oder 10 Anwendung. Dieser bezieht sich auf das Verhältnis k einer Anfangsmesslänge L₀ und einem Anfangsdurchmesser d₀ des kreisförmigen Querschnitts. Bei einem Zugversuch mit einer Probe mit k = 5 wird so die Bruchdehnung A₅ ermittelt.

Bei Eisen- und Stahlblech wird die Bruchdehnung üblicherweise an einer Flachprobe mit einer Anfangsmesslänge L₀ von 80 mm ermittelt und als Bruchdehnung A₈₀ₘₘ oder oft verkürzt als Bruchdehnung A₈₀ angegeben.

Bei NE-Metallen wird die Bruchdehnung üblicherweise an einer Flachprobe mit einer Anfangsmesslänge L₀ von 50 mm ermittelt und als Bruchdehnung A₅₀ₘₘ oder oft verkürzt als Bruchdehnung A₅₀ angegeben.

Die Ermittlung der Bruchdehnung erfolgt normalerweise bei Raumtemperatur, z.B. 23 °C.

Die Hersteller von Gusswerkstoffen oder von mit diesen Materialien hergestellten Gussteilen spezifizieren eine Mindestbruchdehnung für den Gusswerkstoff oder das Gussteil unter Angabe einer Bruchdehnung A, die in der Regel dem Wert A₅, A₁₀, A₅₀ₘₘ oder A₈₀ₘₘ entspricht.

Die JP 2010-178598 A beschäftigt sich mit der Verbesserung der thermischen Leitfähigkeit zwischen einem Statorblechpaket und einem Metallgehäuse, ohne dass die magnetischen Eigenschaften der Bleche sich in einem Verbundteil in größerem Maße verschlechtern, wenn das Statorblechpaket und das Metallgehäuse verbunden werden. Hierzu wird das Blechpaket in das zylindrische Metallgehäuse eingesetzt und das Verbundteil durch Reibrührschweißen des Statorblechpakets und des Metallgehäuses geformt. Da die Verbindung durch das Kneten des Materials bei dem Reibrührschweißen und dem plastischen Fließen erzeugt wird, ist kein Schmelzen der magnetischen Bleche notwendig. Da keine großen thermischen Spannungen in der Verbindung auftreten, werden die magnetischen Eigenschaften der magnetischen Bleche nicht in großem Maße verschlechtert. Durch die metallurgische Verbindung zwischen Metallgehäuse und Statorblechpaket wird die thermische Leitfähigkeit gegenüber einer reinen mechanischen Berühren von Metallgehäuse und Statorblechpaket verbessert und damit auch die Kühlung der dynamoelektrischen Maschine verbessert. Wenn das Metallgehäuse aus einer Aluminium aufweisenden Legierung hergestellt ist, wird das Werkzeug für das Reibrührschweißen mit einer Drehzahl von 800 U/min mit einer Geschwindigkeit von 200 mm/Min entlang des metallischen Gehäuses geführt. Das Werkzeug besteht aus SKD61 (Werkzeugstahl gemäß JIS, z.B. http://www.steel-grades.com/Steel-grades/Tool-steel-Hard-alloy/skd61.html), weist ein zylindrisches Hauptteil von 20 mm Durchmesser und einen an dessen Ende 5 mm hervorstehenden zylindrischen Teil mit einem Durchmesser von 5 mm auf. Die Dicke des Gehäuses beträgt 6 mm. Die Eindringtiefe des Werkzeugs während des Reibrührschweißens beträgt 5,5 mm, wobei das Gehäuse eine Dicke von 6 mm aufweist.

Ferner offenbart die US 2014/0246882 A1 eine Fahrzeugstruktur. Die WO 2005/018865 A1 offenbart ein Verfahren zur Erhöhung der Festigkeit und/oder Belastbarkeit von Werkstücken durch die Methode des Reibschweißens. Weiterhin offenbart die DE 10 2007 026 667 A1 ein Schweißverfahren und eine Vorrichtung zur Durchführung eines Schweißverfahrens. Ferner offenbart die EP 1 400 302 A1 ein Verfahren zum Verbinden von metallischem Material mittels eines Reibschweißwerkzeugs. Schließlich offenbart die US 4,134,036 eine Motormontagevorrichtung für eine rotierende elektrische Maschine. Die JP 2010-178598 A und die JP 2010-178589 A offenbaren jeweils eine rotierende elektrische Maschine.

Der Erfindung liegt die Aufgabe zugrunde, eine verbesserte elektrische Maschine sowie ein Verfahren zu deren Herstellung anzugeben.

Die Aufgabe wird durch ein Verfahren mit den Merkmalen des Anspruchs 1 gelöst.

Ein erfindungsgemäßes Gussteil umfasst insbesondere einen metallischen Funktionsbereich,
- wobei der Funktionsbereich sich in einer ersten Richtung von einer ersten Seite zu einer zweiten Seite des Gussteils erstreckt,
- wobei das Gussteil einen Umgebungsbereich aufweist, der den Funktionsbereich zumindest teilweise umgibt,
- wobei der Funktionsbereich mit einem reibbasierten Verfahren geformt ist.

Die Aufgabe wird auch durch eine elektrische Maschine mit den Merkmalen des Anspruchs 2 gelöst.

Bei einem erfindungsgemäßen Verfahren zur Herstellung eines erfindungsgemäßen Geräts wird der metallische Funktionsbereich des Gussteils mit dem reibbasierten Verfahren geformt.

Die Aufgabe wird erfindungsgemäß vorteilhaft gelöst, indem das Formen des Gussteils mit dem reibbasierten Verfahren vorteilhaft das Gussteil in seiner Funktion als Bauteil eines Geräts, welches eine elektrische Maschine ist, erweitert. Vorteilhaft kostengünstig ist das reibbasierte Verfahren ein reibasiertes Verfahren zum Plastifizieren des Gussteils an einem Ort des zu formenden Funktionsbereichs. Vorteilhaft kostengünstig ist der Funktionsbereich nach einer Fertigstellung des Gussteils in einer hohen Qualität durch ein reibbasiertes Verfahren geformt. Vorteilhaft kostengünstig kann das Formen des Gussteils durch Bearbeiten des Funktionsbereichs mit einem Werkzeug in hoher Qualität erfolgen. Vorteilhaft kann der Umgebungsbereich und der Funktionsbereich in einer Gussform einstückig gegossen hergestellt sein.

Der Funktionsbereich ist für eine Erweiterung der Funktion des Gussteils. Der Funktionsbereich kann das Gussteil durch einzubringende Hinterschnitte, Gewinde, form- oder stoffschlüssige Verbindungen mit direkt angrenzenden Komponenten, insbesondere aus einem anderen Material, vorteilhaft kostengünstig um eine weitere Funktion in einer hohen Qualität erweitern.

Der Funktionsbereich ist auf der zweiten Seite durch Bearbeiten ausgehend von der ersten Seite mit einem Werkzeug geformt, wobei das Bearbeiten ausgehend von der ersten Seite ein reibbasiertes Verfahren umfasst. So kann vorteilhaft kostengünstig in einer hohen Qualität eine Erweiterung der Funktion erreicht werden. Insbesondere in Fällen, bei denen die Funktion des Gussteils an schwer zugänglichen Stellen erweitert werden muss, kann das Bearbeiten ausgehend von der ersten Seite vorteilhaft erfolgen. Die schwer zugängliche Stelle ist hierbei die zweite Stelle.

Es kann der Funktionsbereich lokal begrenzt sein. Vorteilhaft kostengünstig kann der lokal begrenzte Funktionsbereich mit dem reibbasierten Verfahren geformt werden. Indem der lokal begrenzte Funktionsbereich sich nur lokal am Gussteil erstreckt, ist der Aufwand zum Formen des Funktionsbereichs vorteilhaft gering.

Ein erfindungsgemäßes Gerät weist den weiteren Vorteil auf, dass das Gerät vorteilhaft kostengünstig in einer hohen Qualität hergestellt werden kann. Unter anderem kann eine Verschmutzung des Geräts oder eines Arbeitsplatzes zur Herstellung des Geräts vorteilhaft vermieden werden. Bei Spänen, wie sie z.B. bei einer spanabhebenden Bearbeitung des Gehäuses zur Erweiterung der Funktion des Gussteils um eine weitere Funktion auftreten, wird der Arbeitsplatz durch diese Späne verschmutzt und/oder die Späne gelangen in das Gerät. Bei einem erfindungsgemäßen Gerät kann mit dem Funktionsbereich eine weitere Komponente des Geräts fixiert sein. Bei der Herstellung des Funktionsbereichs zur Fixierung der weiteren Komponente kann u.a. eine Verschmutzung des Arbeitsplatzes zur Herstellung des Funktionsbereichs und/oder eine Verschmutzung des Geräts vorteilhaft vermieden werden.

Ein erfindungsgemäßes Verfahren zur Herstellung eines erfindungsgemäßen Geräts weist den weiteren Vorteil auf, dass das Gussteil vorteilhaft kostengünstig in einer hohen Qualität mit Grundfunktionen hergestellt werden kann und in einem zeitlichen Abstand dazu der Funktionsbereich mit dem reibbasierten Verfahren geformt wird, um neben den Grundfunktionen des Gussteils die weitere Funktion vorteilhaft kostengünstig in einer hohen Qualität zu ermöglichen. Unter anderem können die Gussteile in hohen Stückzahlen vorteilhaft hergestellt werden und für verschiedene Gerätetypen verwendet werden, indem die weitere Funktion durch das Formen des Funktionsbereichs mit dem reibbasierten Verfahren vorteilhaft hergestellt wird.

Eine erfindungsgemäße Verwendung eines Werkzeugs zum Formen eines Funktionsbereichs eines erfindungsgemäßen Gussteils weist den weiteren Vorteil auf, dass vorteilhaft kostengünstig in hoher Qualität mit nur einem Werkzeug der metallische Funktionsbereich zum Erweitern der Funktion des Gussteils geformt werden kann.

Es wird hierbei vorteilhaft ein technischer Beitrag zur vorteilhaften Ausgestaltung eines erfindungsgemäßen Gussteils geleistet, um eine weitere Funktion des Gussteils für ein Gerät kostengünstig in einer hohen Qualität zur Verfügung stellen zu können.

So ist eine Ausgestaltung eines Gussteils vorteilhaft, bei der die erste Seite durch das reibbasierte Verfahren kreisförmige Reibspuren aufweist. So kann vorteilhaft der Funktionsbereich mit einem rotierenden Werkzeug geformt werden. Bei einem erfindungsgemäßen Verfahren wird zum Formen des Funktionsbereichs mit dem reibbasierten Verfahren das rotierende Werkzeug mit dem Gussteil in Kontakt gebracht, insbesondere durch Anpressen des Werkzeuges an einer Oberfläche an einem Ort des zu formenden Funktionsbereichs. Hierbei wird durch Reiben und Anpressen des Werkzeugs an der Oberfläche lokal Wärme erzeugt, die ein Material des Gussteils an einem Ort des zu formenden Funktionsbereichs plastifiziert und somit ein Formen des Funktionsbereichs ermöglicht bzw. erleichtert. Das rotierende Werkzeug kann vorteilhaft ein Werkzeug bekannter reibbasierter Verfahren, z.B. ein Werkzeug für ein Reibrührschweißen sein.

In einer weiteren vorteilhaften Ausgestaltung eines Gussteils besteht der Umgebungsbereich aus einem Material mit einer geringen Duktilität, die für das Material durch eine Bruchdehnung A spezifiziert ist, für die ein Wert angegeben ist, der kleiner als 20%, insbesondere kleiner als 10% ist. Die tatsächliche Bruchdehnung kann an unterschiedlichen Stellen des Gusswerkstoffes größere Werte aufweisen. Gussteile können mit einer geringeren Duktilität, d.h. unter Zusicherung einer geringen spezifizierten Mindestbruchdehnung A wirtschaftlich in hohen Stückzahlen mit einer vorteilhaft hohen Genauigkeit mit lokalen Ausprägungen des Gussteils hergestellt werden. Durch die vorteilhafte Formung des Funktionsbereichs mit einem reibbasierten Verfahren wird der Anwendungsbereich der Gussteile mit geringer Duktilität und/oder deren Einsatz in Geräten in hohen Stückzahlen vorteilhaft verbessert, da kostensteigernde spanabhebende Bearbeitungen der Gussteile vorteilhaft vermieden werden. Zur vorteilhaften Vermeidung eines Wärmeabflusses bei der Formung des Funktionsbereichs kann der Umgebungsbereich eine flussbremsende Vorrichtung aufweisen.

In einer weiteren vorteilhaften Ausgestaltung eines Gussteils ist das Gussteil in einem Druckgussverfahren hergestellt. Hierzu werden Materialien bevorzugt, die mindestens eines der Elemente Eisen, Mangan, Chrom oder Kobalt enthalten, um eine Klebeneigung vorteilhaft zu vermeiden. Materialien, insbesondere metallische Druckgusswerkstoffe, die mindestens eines der Elemente in dafür vorteilhafter Konzentration aufweisen, können nur mit einer Bruchdehnung A spezifiziert werden, die höchstens 5% beträgt. Es können so Gussteile aus Materialien hergestellt werden die sich für das Druckgießverfahren vorteilhaft eignen, indem eine bessere Entformbarkeit des gegossenen Gussteils aus der Gussform nach einem Druckgießen in einem Druckgießverfahren vorteilhaft erreicht wird.

In einer weiteren vorteilhaften Ausgestaltung eines Gussteils weist der Funktionsbereich an einer zweiten Stelle nahe bei der zweiten Seite ein Fremdmaterial in einer höheren Konzentration auf, als an einer ersten Stelle nahe bei der ersten Seite. So kann eine stoffschlüssige Verbindung des Funktionsbereichs mit einer an der zweiten Seite angrenzenden Komponente vorteilhaft erfolgen. Bei einem erfindungsgemäßen Verfahren kann hierzu das Werkzeug zum Formen des Funktionsbereichs geringfügig, insbesondere wenige Zehntel Millimeter, in die weitere Komponente eindringen. So kann eine aufwändige Vorbereitung der weiteren Komponente für die stoffschlüssige Verbindung vorteilhaft vermieden werden. Vorteilhaft kann dabei die stoffschlüssige Verbindung durch Diffusion über Grenzflächen des Funktionsbereichs an der zweiten Seite des Gussteils und der angrenzenden weiteren Komponente erzeugt werden. Das Fremdmaterial ist dabei das ursprüngliche Material der weiteren Komponente, das sich mit dem ursprünglichen Material des Gussteils vermischt, so dass die Konzentration der prozentuale räumliche Anteil des Fremdmaterials an Teilbereichen in der Umgebung der ersten bzw. zweiten Stelle ist.

In einer weiteren vorteilhaften Ausgestaltung eines erfindungsgemäßen Gussteils ist die zweite Seite durch eine Ausformung geformt, die von dem Umgebungsbereich umgeben ist, wobei die Ausformung gegenüber dem Umgebungsbereich auf der ersten Seite eine Vertiefung und auf der zweiten Seite eine Erhöhung bildet. So kann die Funktion des Gussteils als Bauteil eines Geräts durch die Ausformung vorteilhaft erweitert werden.

In einer weiteren vorteilhaften Ausgestaltung eines erfindungsgemäßen Gussteils weist die Ausformung zerspantes Material auf. So kann vorteilhaft mit einem Werkzeug in einer an der zweiten Seite des Gussteils am Funktionsbereich angrenzenden weiteren Komponente ein Freiraum für die Ausformung geschaffen werden und anschließend mit dem Werkzeug die Ausformung geformt werden. Vorteilhaft wird hierbei das Werkzeug mit dem Gussteil in Kontakt gebracht, der Freiraum und die Ausformung geschaffen und erst anschließend das Werkzeug von dem Gussteil entfernt. Das zerspante Material wird dabei von einem spanabhebenden Werkzeugteil des Werkzeugs beim Schaffen des Freiraums erzeugt. Durch den Verbleib des zerspanten Materials der angrenzenden Komponente im plastifizierten ursprünglichen Material am Funktionsbereich entsteht eine Art Mischgefüge bzw. Dispersionshärtung. So kann die Ausformung vorteilhaft größeren auf sie einwirkenden Kräften widerstehen.

In einer weiteren vorteilhaften Ausgestaltung eines Gussteils erstreckt sich der geformte Funktionsbereich linienförmig in eine zweite Richtung. So kann vorteilhaft der Funktionsbereich den Abmessungen eines erfindungsgemäßen Geräts und gegebenenfalls den damit verbundenen Kräften in seiner Länge in der zweiten Richtung angepasst werden. Hierbei muss das Formen des Funktionsbereichs mit dem reibbasierten Verfahren in der ersten Richtung und in einer dritten Richtung vorteilhaft nicht angepasst werden. Die erste und die dritte Richtung spannen eine Querschnittsebene auf, aus der die zweite Richtung herausführt. Während des Formens des Funktionsbereichs kann sich ein Werkzeug in einem Verfahrensschritt für das Formen des Funktionsbereichs in der zweiten Richtung zumindest abschnittsweise mit einem Vorschub bewegen.

In einer weiteren vorteilhaften Ausgestaltung eines Gussteils ist der geformte Funktionsbereich punktförmig. So kann der geformte Funktionsbereich in einem erfindungsgemäßen Gerät in einem verdeckten Bereich vorteilhaft vorhanden sein. Während des Formens des Funktionsbereichs kann sich ein Werkzeug in einem Verfahrensschritt für das Formen des Funktionsbereichs in der ersten Richtung mit einem Vorschub bewegen.

In einer vorteilhaften Ausgestaltung eines erfindungsgemäßen Geräts ist das erfindungsgemäße Gerät eine Maschine, die eine weitere Komponente und eine Vorrichtung zum Sichern der weiteren Komponente gegen Verdrehen umfasst, wobei die Vorrichtung eine Verbindung zwischen dem Funktionsbereich des Gussteils und der weiteren Komponente aufweist. Es kann ein Arbeitsplatz zur Herstellung der Vorrichtung zum Sichern der weiteren Komponente gegen ein Verdrehen mit anderen Fertigungsschritten zur Herstellung des Geräts vorteilhaft zusammengefasst werden. So kann ein Fertigungsschritt zur Positionierung der weiteren Komponente in dem Gerät mit dem Formen des Funktionsbereichs mit einem reibbasierten Verfahren kombiniert werden. Dies ist zumindest dadurch möglich, dass das Formen des Funktionsbereichs eine Verschmutzung des Arbeitsplatzes vorteilhaft vermeidet. Würde man den Funktionsbereich durch spanabhebende Bearbeitung formen, wäre der Arbeitsplatz zur Herstellung des nachfolgenden Geräts verschmutzt, was eine Positionierung der weiteren Komponente in dem Gerät erschwert. Insbesondere bei einer elektrischen Maschine können Späne Kurzschlüsse verursachen, die nicht nur die elektrische Maschine zerstören können, sondern auch eine Gefahrenquelle für die Umgebung der elektrischen Maschine darstellen. Insbesondere kann so vorteilhaft kostengünstig in hoher Qualität eine erfindungsgemäße Maschine zur Verfügung gestellt werden, die eine elektrische Maschine ist. Die Verbindung zwischen dem Funktionsbereich des Gussteils und der weiteren Komponente zum Sichern gegen Verdrehen kann eine stoffschlüssige oder formschlüssige Verbindung sein. So sind vorteilhaft keine weiteren Bauteile für die Vorrichtung zum Sichern gegen Verdrehen notwendig.

Die weitere Komponente kann eine kreisförmige Hüllkurve aufweisen, wobei das Gussteil die weitere Komponente angrenzend an der Hüllkurve umgibt und wobei das Gussteil und die weitere Komponente an der Hüllkurve eine Presspassung bilden. So kann die Presspassung vorteilhaft durch Erwärmen des Gussteils hergestellt werden und anschließend die Restwärme für das Formen des Funktionsbereichs vorteilhaft genutzt werden. So kann weiterhin vorteilhaft der Fertigungsschritt für die Presspassung und der Fertigungsschritt zum Formen des Funktionsbereichs kombiniert werden.

Es kann der Funktionsbereich lokal begrenzt sein. Es kann der lokal begrenzte Funktionsbereich vorteilhaft zum Sichern der weiteren Komponente verwendet werden, da die Presspassung für die meisten Betriebszustände in einem Betrieb eines Gerätes die weitere Komponente gegen Verdrehen sichert und die Vorrichtung zum Sichern der weiteren Komponente gegen Verdrehen nur bei höheren Kräften oder bei einer durch einer erhöhten Temperatur des Gerätes verminderten Presspassung Kräfte und Drehmomente aufnehmen muss. Durch die lokale Begrenzung kann der Zeitbedarf und der Aufwand für das Formen des Funktionsbereiches vorteilhaft reduziert werden. Hierzu kann sich der lokale Funktionsbereich sich z.B. nur über höchstens 25% einer Abmessung der weiteren Komponente in einer zweiten oder allen Richtung erstrecken.

In einer weiteren vorteilhaften Ausgestaltung eines erfindungsgemäßen Geräts sichert die Vorrichtung die weitere Komponente unsymmetrisch gegen das Verdrehen. Der Funktionsbereich und weitere Funktionsbereiche müssen so vorteilhaft nicht in einer Querschnittsebene des Gerätes symmetrisch zueinander angeordnet sein. So kann der Zeitbedarf und der Aufwand für das Formen des Funktionsbereiches vorteilhaft reduziert werden.

In einer weiteren vorteilhaften Ausgestaltung eines Verfahrens zur Herstellung eines erfindungsgemäßen Geräts umfasst das reibbasierte Verfahren einen Verfahrensschritt, bei dem ein rotierendes Werkzeug mit einer hohen Drehzahl, insbesondere mit einer Drehzahl größer als 3000 U/min, und einem kleinen Vorschub, insbesondere einem Vorschub von höchstens 50 mm/min, an dem Gussteil reibt. So kann ein Gussteil mit einem Material geringer Duktilität in seiner Funktion als Bauteil eines erfindungsgemäßen Geräts, insbesondere einer Maschine, vorteilhaft erweitert werden.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigen:
- FIG 1: ein Blick auf eine erste Seite eines ersten Ausführungsbeispiels eines Gussteils,
- FIG 2: ein Blick auf eine zweite Seite des ersten Ausführungsbeispiels des Gussteils,
- FIG 3: ein erstes Ausführungsbeispiel eines Gerätes, das ein zweites Ausführungsbeispiel eines Gussteils umfasst,
- FIG 4: ein Querschnitt entlang der Linie IV-IV durch das erste Ausführungsbeispiel des Gerätes gemäß der FIG 3,
- FIG 5: eine Momentaufnahme eines zweiten Ausführungsbeispiels eines Verfahrens zur Herstellung des Geräts gemäß der FIG 3 und FIG 4,
- FIG 6: ein zweites Ausführungsbeispiel eines Gerätes, das ein drittes Ausführungsbeispiel eines Gussteils umfasst,
- FIG 7: ein Querschnitt entlang der Linie VI-VI durch das zweite Ausführungsbeispiel des Gerätes gemäß der FIG 6,
- FIG 8 bis 11: Momentaufnahmen eines Ausführungsbeispiels eine Verfahrens zur Herstellung des Geräts gemäß der FIG 6 und FIG 7,
- FIG 12 bis 15: Ausführungsbeispiele von Werkzeugen zum Formen eines Funktionsbereiches mit einem reibbasierten Verfahren.

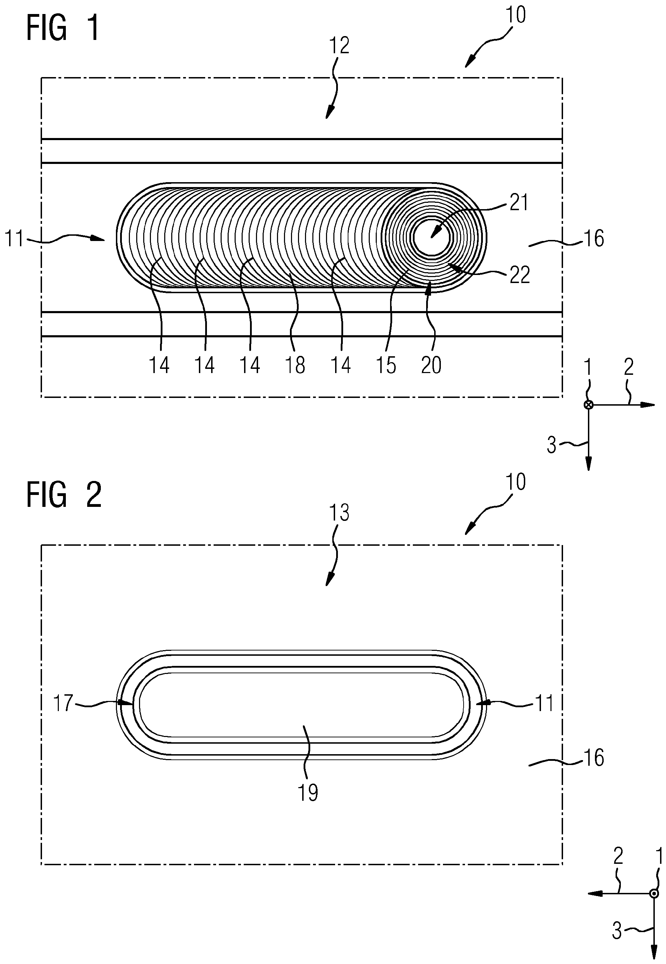

Figur 1 zeigt einen Blick auf eine erste Seite 12 eines ersten Ausführungsbeispiels eines Gussteils 10, das einen metallischen Funktionsbereich 11 umfasst, wobei der Funktionsbereich 11 sich in einer ersten Richtung 1 von der ersten Seite 12 zu einer zweiten Seite 13 des Gussteils erstreckt.

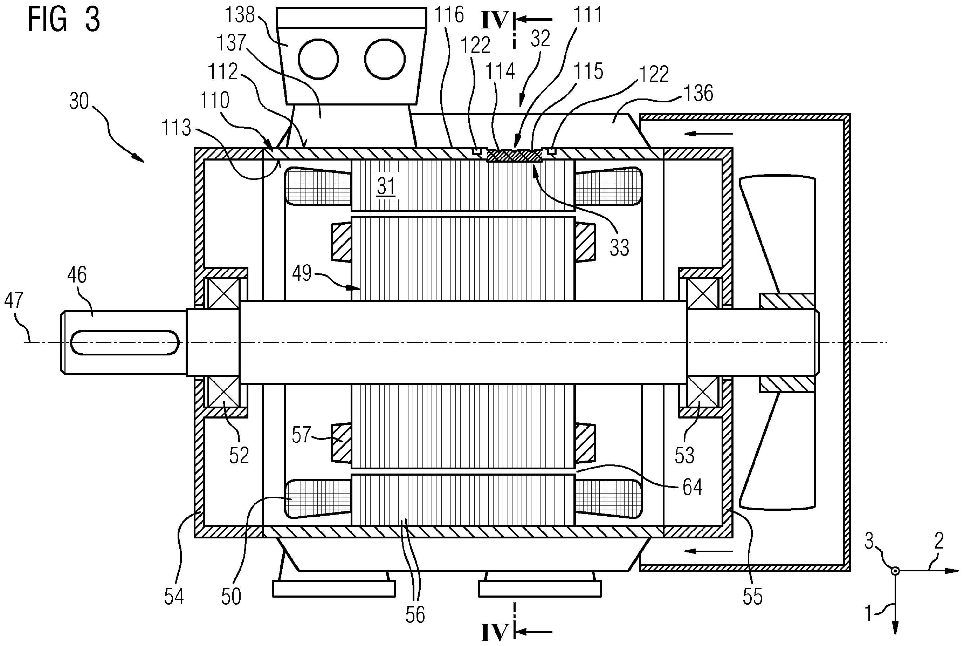

Die Figur 2 zeigt einen Blick auf die zweite Seite 13 des ersten Ausführungsbeispiels des Gussteils 10. Das Gussteil 10 weist einen Umgebungsbereich 16 auf, der den Funktionsbereich 11 umgibt. Der Funktionsbereich 11 ist mit einem reibbasierten Verfahren geformt. Das reibbasierte Verfahren hinterlässt an dem Gussteil 10 Reibspuren 14, die bei Verwendung eines rotierenden Werkzeugs durch das Rotieren des Werkzeugs relativ zu dem Gussteil 10 kreisförmig sind. Bei einem Ausführungsbeispiel eines Verfahrens zur Herstellung des Gussteils 10 oder eines der Geräte gemäß der Figuren 3 bis 11 wird der metallische Funktionsbereich 11 des Gussteils 10 mit dem reibbasierten Verfahren durch Bearbeiten des Funktionsbereichs 11 mit dem rotierenden Werkzeug geformt. Das rotierende Werkzeug wird zum Formen des Funktionsbereichs 11 mit dem reibbasierten Verfahren mit dem Gussteil 10 in Kontakt gebracht. Hierbei wird durch Reibung des Werkzeugs an der Oberfläche der ersten Seite 12 lokal Wärme erzeugt, die ein Material des Gussteils 10 an einem Ort des zu formenden Funktionsbereichs 11 plastifiziert und somit ein Formen des Funktionsbereichs 11 ermöglicht bzw. erleichtert. Nachdem das rotierende Werkzeug das Gussteil 10 im gewünschten Maße geformt hat, wird das rotierende Werkzeug von dem Gussteil 10 entfernt. Dies führt dazu, dass das Gussteil 10 einen Abdruck 20 des Werkzeugs, eventuell auch nur schemenhaft, aufweisen kann. In dem Ausführungsbeispiel der Figur 1 wurde ein Werkzeug eingesetzt, wie es üblicherweise für ein Reibrührschweißen verwendet wird. Ein innerer Teil 21 des Abdrucks 20 bildet dabei gegenüber dem kreisförmigen äußeren Teil 22 des Abdrucks 20 eine konzentrisch zu diesem gelegene kreisförmige Vertiefung. Der äußere Teil 22 des Abdrucks ist dabei durch eine Schulter des Werkzeugs hervorgerufen und der innere Teil des Abdrucks 21 ist durch einen Pin des Werkzeugs hervorgerufen. Der Umgebungsbereich 16 besteht aus einem Material mit einer geringen Duktilität, die für das Material durch eine Bruchdehnung A spezifiziert ist, für die ein Wert angegeben ist, der kleiner als 20%, insbesondere kleiner als 10% ist. In dem Ausführungsbeispiel der Figur 1 ist der Umgebungsbereich 16 und der Funktionsbereich 11 in einer Gussform einstückig gegossen aus dem Material EN AC-AlSi9Cu3(Fe) hergestellt. Dieses Material weist eine geringe Duktilität auf. Diese ist für das Material durch eine Bruchdehnung A spezifiziert, für die ein Wert "<1" angegeben ist. Das Material gehört zu Aluminium-Legierungen, die nach der EN 1706 spezifiziert werden; dabei wird die Bruchdehnung A als Bruchdehnung A_{50 mm} als Wert angegeben. Da es von dem Material AlSi9Cu3(Fe) eine Vielzahl von Varianten dieser Legierung gibt, kann der spezifizierte Wert für die Bruchdehnung A auch als ein Wert zwischen 1 und 3 angegeben werden. Das Gussteil 10 ist in einem Druckgussverfahren hergestellt worden. Die zweite Seite 13 ist durch eine Ausformung 17 geformt, die von dem Umgebungsbereich 16 umgeben ist, wobei die Ausformung 17 gegenüber dem Umgebungsbereich 16 auf der ersten Seite 12 eine Vertiefung 18 und auf der zweiten Seite 13 eine Erhöhung 19 bildet. Der geformte Funktionsbereich 11 erstreckt sich linienförmig in eine zweite Richtung 2, die senkrecht zu der ersten Richtung 1 verläuft. Zum Formen des Funktionsbereichs kann so das Werkzeug mit dem Gussteil 10 in Kontakt gebracht werden und anschließend über einen größeren Abschnitt entlang der zweiten Richtung 2 mit einem Vorschub bewegt werden, bevor das Werkzeug von dem Gussteil 10 entfernt wird und ein Abdruck 20 des Werkzeugs an dem Gussteil 10 verbleibt. Bei dem Ausführungsbeispiel eines Verfahrens zur Herstellung des Gussteils 10 oder eines der Geräte gemäß der Figuren 3 bis 11 mit einem reibbasierten Verfahren weist das reibbasierte Verfahren einen Verfahrensschritt auf, bei dem das rotierende Werkzeug mit einer Drehzahl von 3200 U/min und dem Vorschub von 10 mm/min an dem Gussteil 10 reibt.

Die Figur 3 zeigt ein erstes Ausführungsbeispiel eines Geräts 30, das ein zweites Ausführungsbeispiel eines Gussteils 110 umfasst. Das zweite Ausführungsbeispiel des Gussteils 110 weist Merkmale auf, die anhand der Figuren 1 und 2 beschrieben wurden. Die Merkmale sind in den Figuren 3 bis 5 größtenteils mit Bezugszeichen versehen die aus den Bezugszeichen der Figuren 1 und 2 durch Voranstellen einer "1" entstanden sind. So ist z.B. die Beschreibung für den metallischen Funktionsbereich 11 der Figur 1 entsprechend auf den metallischen Funktionsbereich 111 der Figuren 3 bis 5 zu übertragen. Auf die unterschiedlichen Merkmale des zweiten Ausführungsbeispiels des Gussteils 110 gegenüber dem ersten Ausführungsbeispiel des Gussteils 10 wird nachfolgend eingegangen.

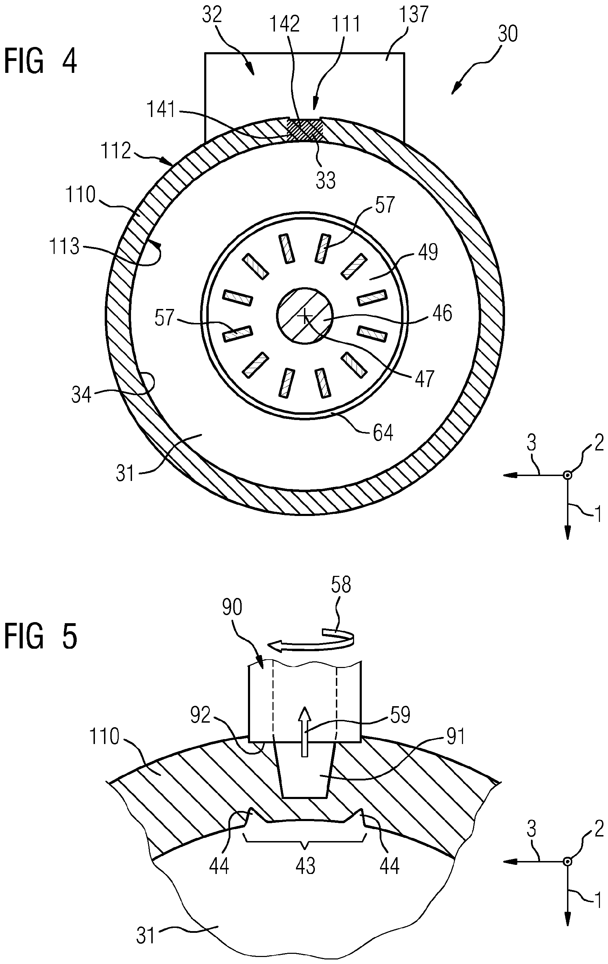

Bei dem Gerät 31 ist mit dem Funktionsbereich 111 eine weitere Komponente 31 des Geräts 30 fixiert. Bei dem Ausführungsbeispiel für ein Verfahren zur Herstellung des Geräts 30 bzw. eines Geräts gemäß der Figuren 3 bis 11 wird das Gussteil 110 mit Grundfunktionen bereitgestellt und der Funktionsbereich 111 mit dem reibbasierten Verfahren geformt, um neben den Grundfunktionen des Gussteils 110 eine weitere Funktion des Gussteils zu ermöglichen. Bei dem Ausführungsbeispiel des Geräts 30 gemäß Figuren 3 bis 5 ist das Gerät 30 eine Maschine, die eine weitere Komponente 31 und eine Vorrichtung 32 zum Sichern der weiteren Komponente 31 gegen Verdrehen umfasst, wobei die Vorrichtung eine Verbindung 33 zwischen dem Funktionsbereich 111 des Gussteils 110 und der weiteren Komponente 31 aufweist. Die weitere Komponente 31 weist eine kreisförmige Hüllkurve 34 auf, wobei das Gussteil 110 die weitere Komponente 31 angrenzend an die Hüllkurve 34 umgibt und wobei das Gussteil 110 und die weitere Komponente 31 an der Hüllkurve 34 eine Presspassung bilden (siehe Figur 4). Das Gussteil 110 ist so nicht nur Teil eines Gehäuses des Geräts 30, sondern fixiert auch die weitere Komponente 31 in dem Gehäuse. Bei der Maschine gemäß Figur 3 und Figur 4 wird die weitere Komponente 31 durch die Presspassung an einer Oberfläche der weiteren Komponente 31 und einer Innenfläche des Gussteils 110 an der zweiten Seite 113 für einen Betrieb der Maschine reibschlüssig fixiert. Bei einem Betrieb des Geräts 30, d.h. der Maschine gemäß Figur 3, wird ein Rotor 49 in Drehung um eine Drehachse 47 versetzt, die sich entlang einer zweiten Richtung 2 erstreckt, und es kann an einer Welle 46, an der der Rotor 49 befestigt ist, mechanische Energie an einen mechanischen Verbraucher in Form einer Drehbewegung abgegeben werden. Die dabei auftretenden Kräfte und Drehmomente führen zu Gegenkräften an der weiteren Komponente 31, die im Gussteil 110 fixiert ist. Bei einem Betrieb der Maschine kann auch der Maschine mechanische Energie über die Welle 46 zugeführt werden, die auch zu entsprechenden Gegenkräften an der weiteren Komponente 31 führt. Bei der Maschine gemäß Figur 3 ist die Welle 46 mit einer ersten Lagervorrichtung 52 in einem ersten Lagerschild 54 und mit einer zweiten Lagervorrichtung 53 in einem zweiten Lagerschild 55 gelagert. Die erste und zweite Lagervorrichtung 52,53 weisen jeweils Wälzlager auf. Das erste Lagerschild 54 und das zweite Lagerschild 55 legen eine Erstreckung des Gehäuses des Geräts 30 in der zweiten Richtung 2 fest. Das erste Lagerschild 54 und das zweite Lagerschild 55 sind an den Enden des Gussteils 110 befestigt, wobei sich das Gussteil 110 in der zweiten Richtung 2 von dem einen Ende bis zum weiteren Ende erstreckt. Zur Vermeidung eines Wärmeabflusses bei der Formung des Funktionsbereichs 111 kann der Umgebungsbereich 116 eine flussbremsende Vorrichtung 122 aufweisen. Die flussbremsende Vorrichtung 122 weist eine Nut auf, die den metallischen Funktionsbereich 111 umgibt und so eine Dicke des Gussteils 110 und den damit verbundenen Querschnitt verjüngt. So kann beim Formen des Funktionsbereichs 111 durch die Querschnittsverjüngung ein Wärmeabfluss vorteilhaft vermieden werden.

Das Gerät 30 ist eine elektrische Maschine. Bei der elektrischen Maschine kann durch ein elektro-magnetisches Zusammenwirken zwischen dem Rotor 49 und einem Stator als weiterer Komponente 31 mechanische Energie in elektrische Energie umgewandelt werden und umgekehrt. Die elektrische Energie kann an einer Wicklung 50, die an der weiteren Komponente 31 befestigt ist, zugeführt werden und durch das elektro-magnetische Zusammenwirken zwischen der weiteren Komponente 31 und dem Rotor 49 in mechanische Energie umgewandelt werden. Die weitere Komponente 31 weist als Stator 42 ein Blechpaket auf, das von einem ersten Ende bis zu einem zweiten Ende des Stators geschichtete Bleche 56 umfasst. Die geschichteten Bleche 56 dienen zur Führung des magnetischen Flusses in einem Betrieb der elektrischen Maschine. Der Rotor 49 weist eine Einrichtung auf, um über den Luftspalt 64 mit dem Stator, insbesondere mit der am Stator befestigten Wicklung 50, elektro-magnetisch zusammenwirken zu können. In dem Ausführungsbeispiel des Geräts 30 ist die Einrichtung eine Kurzschlusswicklung 57, so dass der Rotor 49 ein Käfigläufer ist. Das Gussteil 110 weist Kühlrippen 36 auf seiner ersten Seite 112 auf, die einstückig mit dem Gussteil 110 gegossen sind. Die Kühlrippen 136 begünstigen den Wärmeabfluss bei der Formung des Funktionsbereichs 111, sind aber vorteilhaft für ein Kühlen der elektrischen Maschine in deren Betrieb. Im Betrieb der elektrischen Maschine wird mit einem durch die Welle 46 angetriebenen Lüfter ein Luftstrom entlang der Kühlrippen 136 geführt, um eine Abwärme der elektrischen Maschine über Kühlrippen 136 abzuführen. Des Weiteren weist das Gussteil 110 einen einstückig mit diesem gegossenen Teil 137 eines Anschlusskastens 138 auf. Über den Anschlusskasten 138 können die Wicklung 50 und weitere Wicklungen des Stators zum elektro-magnetischen Zusammenwirken mit dem Rotor 49 an eine Drehphasen-Wechselstromquelle angeschlossen werden. So kann die elektrische Maschine als Drehstrom-Asynchronmotor betrieben werden.

Das Gussteil 110 besteht aus einem Material mit einer geringen Duktilität. Das für das Gussteil 110 verwendete Material bzw. der Werkstoff ist EN AC-AlSi11Cu2(Fe), für das die geringe Duktilität mit einer Bruchdehnung A kleiner 1% spezifiziert ist. Insbesondere ist hier für die Bruchdehnung A der Wert für A_{50 mm} spezifiziert. Das Gussteil 110 ist mit den Kühlrippen 136 und dem Teil 137 des Anschlusskastens einstückig in einem Druckgussverfahren hergestellt worden.

Figur 4 zeigt einen Querschnitt entlang der Linie IV-IV durch das erste Ausführungsbeispiel des Geräts 30 gemäß Figur 3. Neben einigen beschriebenen Merkmalen ist in Figur 4 die Lage zweier Stellen 141,142 eingezeichnet. Der Funktionsbereich 111 weist an einer zweiten Stelle 141 nahe bei der zweiten Seite 113 ein Fremdmaterial in einer höheren Konzentration auf, als an einer ersten Stelle 142 nahe bei der ersten Seite 112. Das Fremdmaterial ist dabei das ursprüngliche Material der weiteren Komponente 31. In dem Ausführungsbeispiel der Figur 4 umfasst die weitere Komponente 31 als Stator einer elektrischen Maschine, die geschichteten Bleche 56 umfassen Eisen-Silizium-Legierungen. Der Funktionsbereich 111 weist, wie dies noch in Zusammenhang mit Figur 5 beschrieben wird, Teile der Bleche 56, z.B. aus der Aluminium-Silizium-Legierung, als Fremdmaterial an der zweiten Stelle 141 in der höheren Konzentration auf.

Figur 5 zeigt eine Momentaufnahme eines Ausführungsbeispiels eines Verfahrens zur Herstellung des Geräts 30 gemäß Figuren 3 und 4.

Zusätzlich zu dem bereits beschriebenen Ausführungsbeispiel eines Verfahrens zur Herstellung eines der Geräte gemäß Figuren 3 bis 11 dringt das Werkzeug 90 bei einem Ausführungsbeispiel eines Verfahren zur Herstellung des Geräts 30 gemäß Figur 5 beim Formen des Funktionsbereichs 111 geringfügig, insbesondere wenige zehntel Millimeter in die weitere Komponente 31 ein. Vorher wurde zunächst mit einem auf das Gussteil 110 aufgesetzten Pin 91 des Werkzeugs 90 und nach einem weiteren Eindringen des Werkzeugs 90 in die erste Richtung 1 des Gussteils 110 mit einer Schulter 92 des Werkzeugs 90 das Gussteil 110 lokal an dem Ort des Funktionsbereichs 111 plastifiziert. Das Werkzeug 90 rotiert hierbei in einer Drehrichtung 58 um seine Längsachse. Nach dem Eindringen des Werkzeugs 90 in die weitere Komponente 31 wird das Werkzeug 90 in einer zur ersten Richtung 1 parallelen Richtung 59 aus dem Gussteil 110 gezogen. Die Momentaufnahme der Figur 5 zeigt diesen Verfahrensschritt. Durch das Eindringen des rotierenden Werkzeugs 90 in das Gussteil 110 und die weitere Komponente 31 wird das Fremdmaterial aus der Komponente 31 mit dem Material des Gussteils 110 in einem Bereich 43 vermischt, wobei sich in dem Bereich 43 die stoffschlüssige Verbindung 33 bildet. Durch die Rotation des Werkzeugs 90 wird an den Rändern 44 des Bereichs 43 das Fremdmaterial aus der weiteren Komponente 31 in stärkerem Maße in das Gussteil 110 hineingezogen und mit dem Material des Gussteils 110 durchmischt, als in einem Bereich zwischen den Rändern 44.

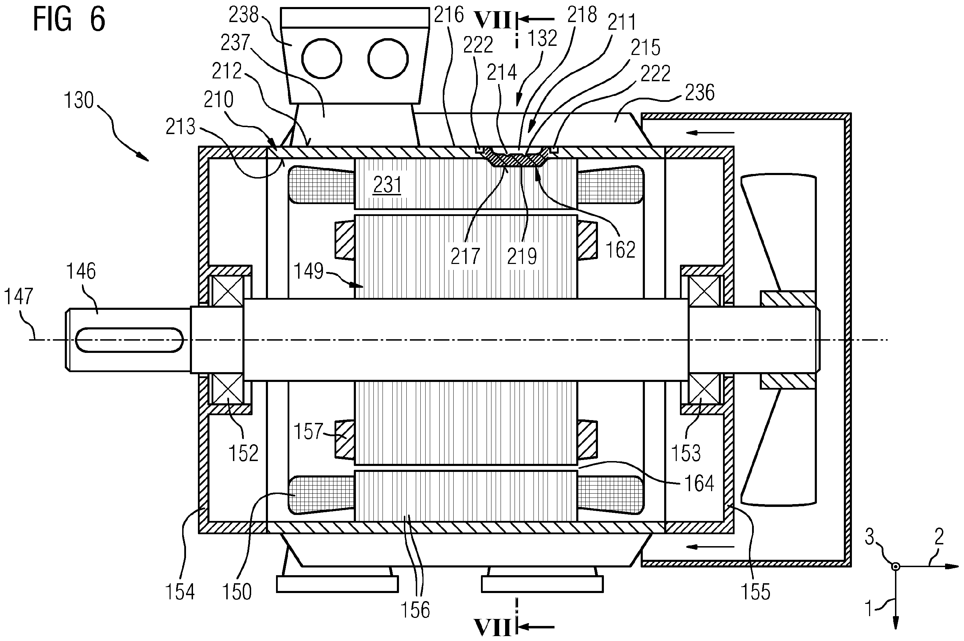

Figur 6 zeigt ein zweites Ausführungsbeispiel eines Geräts 130, das ein drittes Ausführungsbeispiel eines Gussteils 210 umfasst. Dieses Ausführungsbeispiel weist Merkmale auf, die anhand der Figuren 1 bis 4 beschrieben wurden. Die Merkmale wurden in Figur 6 größtenteils mit Bezugszeichen versehen, die bei dem Gerät 130 aus den Bezugszeichen der Figuren 3 bis 4 durch Voranstellen einer "1" oder aus Bezugszeichen der Figuren 1 und 2 bei dem Gussteil 210 durch Voranstellen einer "2" entstanden sind. Auf die unterschiedlichen Merkmale des Geräts 130 und des Gussteils 210 gegenüber dem Gerät 30, dem Gussteil 110 der Figur 3 und dem Gussteil 10 der Figur 1 wird nachfolgend eingegangen.

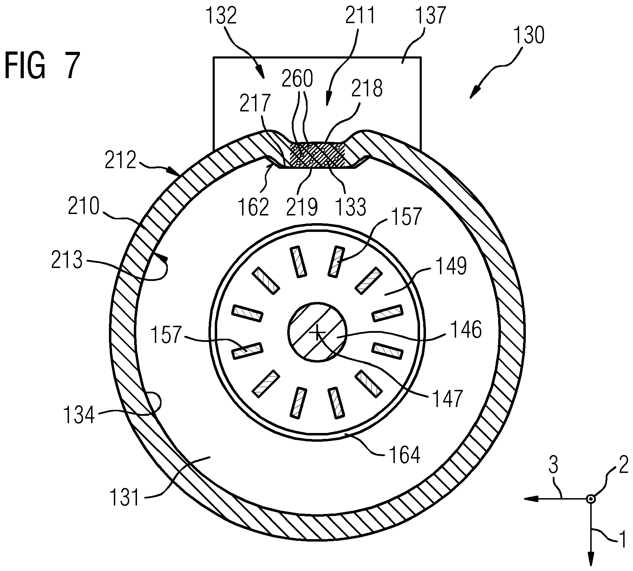

Die zweite Seite 213 des Gussteils 210 ist durch die Ausformung 217 geformt, wobei diese Ausformung 217 zerspantes Material 260 aufweist. Das zerspante Material 260 ist in Figur 7 durch Teilchen 260 in dem Querschnitt des Funktionsbereichs 211 angedeutet. Die Figur 7 zeigt einen Querschnitt entlang der Linie VI-VI durch das zweite Ausführungsbeispiel des Geräts 130 gemäß Figur 6. Die Ausformung 217 mit dem zerspanten Material 260 erstreckt sich in eine Ausnehmung 162 der weiteren Komponente 131. Die Ausnehmung 162 wird durch einige aufeinanderfolgend geschichtete Bleche 156 der weiteren Komponente 131 festgelegt. Die weitere Komponente 131 bildet dabei im Ausführungsbeispiel gemäß Figur 7 den Stator der elektrischen Maschine, d.h. des Geräts 130.

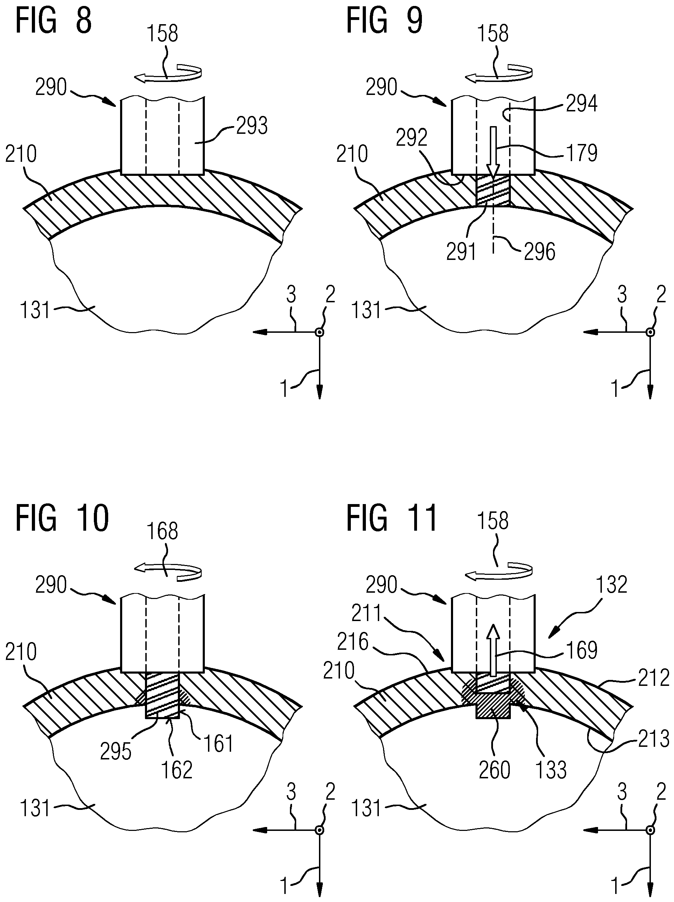

Die Figuren 8 bis 11 zeigen Momentaufnahmen eines Ausführungsbeispiels eines Verfahrens zur Herstellung des Geräts 130 gemäß Figuren 6 und 7, für das zusätzlich zu dem bereits beschriebenen Ausführungsbeispiel eines Verfahrens zur Herstellung eines der Geräte gemäß Figuren 3 bis 11 auf die nachfolgenden Verfahrensschritte eingegangen wird. In dem Ausführungsbeispiel des Verfahrens gemäß der Figuren 8 bis 11 wird ein rotierendes Werkzeug 290 verwendet, das wie das Werkzeug 90 ein zylindrisches Hauptteil 290 aufweist, in dem ein zylindrisches Teil als Pin 291 konzentrisch zum Hauptteil 293 in einem Kanal 294 in das Hauptteil 293 in einer Richtung 169 zurückgezogen werden kann, oder in einer Richtung 179 aus dem Hauptteil 293 ausgefahren werden kann. Der Pin 291 weist eine zylindrische Form auf. An der Mantelfläche des Pins 291 ist eine Schneidvorrichtung 295 vorhanden, die eine Werkzeugschneide zur spanabhebenden Bearbeitung aufweist. In einer zweiten Drehrichtung 168 des Werkzeugs 290 um dessen Längsachse 296 ist mit dem Werkzeug 290 eine spanabhebende Bearbeitung möglich. In der entgegengesetzten Drehrichtung 158 ist mit der Schneidvorrichtung 295 keine spanabhebende Bearbeitung möglich. Das zylindrische Hauptteil 293 weist einen größeren Durchmesser als der Pin 291 auf, wobei das Hauptteil 293 benachbart zu dem Pin 291 eine Schulter 292 aufweist. Wie bei dem Ausführungsbeispiel eines Verfahrens zur Herstellung eines Geräts 10,110,210 gemäß den Figuren 3 bis 11 beschrieben, wird zum Formen des Funktionsbereichs 211 des Gussteils 210 mit dem reibbasierten Verfahren das rotierende Werkzeug 290 mit dem Gussteil 210 in Kontakt gebracht. Hierbei ist, wie in FIG 8 zu sehen, der Pin 291 in das Hauptteil 293 zurückgezogen. Das Werkzeug rotiert hierbei in der Richtung 158. Hierdurch wird das Material des Gussteils 210 lokal an einem Ort des zu formenden Funktionsbereichs 211 plastifiziert. Gemäß der Skizze in Figur 9 wird in einem nachfolgenden Schritt der Pin 296 ausgefahren und taucht im plastifizierten Material bis zu einer Oberfläche der weiteren Komponente 131 ein. Dabei wird weiterhin durch die Schulter 292 das Material des gegossenen Teils 210 plastifiziert. Gemäß Figur 10 wechselt das Werkzeug 290 nach dem Erreichen der Oberfläche der weiteren Komponente 131 die Drehrichtung. Während die Schulter 292 weiterhin das Material des Gussteils 210 plastifiziert, taucht der Pin 291 durch spanabhebende Bearbeitung in der zweiten Drehrichtung 168 in die weitere Komponente 131 ein. Hierdurch wird in der weiteren Komponente 131, insbesondere in den Blechen 156, eine Ausnehmung erzeugt. Gemäß Figur 11 wird in einem weiteren Verfahrensschritt nach einem Erreichen einer Endposition des Pins 291 in der ersten Richtung 1, d.h. bei einer ausreichenden Größe der Ausnehmung für eine formschlüssige Verbindung, der Pin 291 um ein definiertes Maß zurückgezogen. Gleichzeitig fließt das plastifizierte Material des Gussteils 210 und einige der durch die spanabhebende Bearbeitung vorhandenen Späne 260 unter Einwirkung einer von der Schulter 291 in der ersten Richtung 1 wirkenden Druckkraft in den erzeugten Freiraum der Ausnehmung 161.

Während des gesamten Vorgangs wirkt die Schulter 292 abdichtend gegenüber dem Austreten des plastifizierten und zerspanten Materials, wodurch u.a. eine Verschmutzung des Geräts 130, insbesondere des Ausführungsbeispiels als elektrische Maschine oder eine Verschmutzung eines Arbeitsplatzes zur Herstellung des Geräts 130 vorteilhaft vermieden werden. So weist das Gerät 130 die Vorrichtung 132 zum Sichern der weiteren Komponente 131 gegen Verdrehen auf, wobei die Vorrichtung 132 die Verbindung 133 als formschlüssige Verbindung zwischen dem Funktionsbereich 211 des Gussteils 210 und der weiteren Komponente 131 aufweist. Durch den Verbleib des zerspanten Materials 260 im plastifizierten ursprünglichen Material des Funktionsbereich 211 entsteht eine Art Mischgefüge bzw. Dispersionshärtung. So kann die formschlüssige Verbindung 133 größeren auf sie einwirkenden Kräften widerstehen.

Durch die Verwendung des Werkzeugs 290 mit dem ausfahrbaren Pin 291 ist nach dem Abkühlen des Gussteils 210, insbesondere des Funktionsbereichs 211, ein Formschluss zwischen dem Gehäuse des Geräts 130 und dem Stator als weiterer Komponente 131 vorhanden, ohne dass eine separate Bearbeitung und eine zusätzliche Komponente zum Herstellen der Sicherung gegen Verdrehen des Stators relativ zum Gehäuse erforderlich sind. Vorteilhaft kann das beschriebene Verfahren bzw. die beschriebene Verwendung unter Einsatz des Werkzeugs 290 mit dem ausfahrbaren Pin 291 auf einer universell gestalteten Anlage realisiert werden, auf der auch der herkömmliche Prozess des Sicherns durch eine Schraubverbindung bzw. durch Bohren und Verstiften weiterhin möglich ist. Durch das Anbringen der Ausnehmung 162 mit dem Werkzeug 290 mit dem ausfahrbaren Pin 291 kann vorteilhaft auf eine genaue Positionierung der weiteren Komponente 131 relativ zu dem Gussteil 210 verzichtet werden. Für den Fall eines Ausführungsbeispiels eines Gerätes, bei dem eine weitere Komponente 131 verbaut ist, die anders als in dem Ausführungsbeispiel gemäß der FIG 6 eine Ausnehmung bereits vor dem Eindringen der weiteren Komponente 131 in das Gussteil 210 aufweist, kann in einem weiteren Verfahren zur Herstellung dieses Geräts ein rotierendes Werkzeug 90,190 mit feststehendem Pin 91,191 mit dem Gussteil 210 in Kontakt gebracht werden und durch Reibung des Werkzeugs 90,190 an der ersten Seite 112 des Gussteils 210 lokal Wärme erzeugt werden, die ein Material des Gussteils 210 an einem Ort des zu formenden Funktionsbereichs plastifiziert und somit ein Formen des Funktionsbereichs ermöglicht bzw. erleichtert. Das Material des Gussteils 210 wird so lokal plastifiziert und im gleichen Arbeitsschritt geometrisch zu einer Ausformung geformt, die gegenüber einem Umgebungsbereich 216 auf der ersten Seite 212 eine Vertiefung und auf der zweiten Seite 213 eine Erhöhung bildet. Dabei fließt das plastifizierte Material des Gussteils 210 durch den Druck des Werkzeugs 90, 190 in einen Freiraum der Ausnehmung der weiteren Komponente, d.h. des Stators.

Die Ausführungsbeispiele der Geräte 30,130 weisen lokal begrenzte Funktionsbereiche 111, 211 auf. Die Funktionsbereiche 111, 211 erstrecken sich nur über höchstens 25% einer Abmessung der weiteren Komponente 31, 131 in der zweiten Richtung 2.

Bei den Ausführungsbeispielen der Geräte 30,130 sichern die Vorrichtungen 32,132 die weitere Komponenten 31,131 unsymmetrisch gegen das Verdrehen. Die Vorrichtungen 32,132 sind in den in den Figuren 4 und 7 durch die erste Richtung 1 und die dritte Richtung 3 aufgespannten Querschnittsebenen unsymmetrisch angeordnet, da je Gerät 30, 130 nur eine Vorrichtung 32,132 vorhanden ist.

In einem weiteren Ausführungsbeispiel eines Gerätes erstreckt sich der geformte Funktionsbereich nicht linienförmig in eine zweite Richtung wie bei den Geräten 30,31 gemäß der Figuren 3 und 6, sondern ist punktförmig innerhalb des Teils 137,237 des Anschlusskastens 138 vorhanden. So ist der geformte Funktionsbereich in einem verdeckten Bereich vorhanden.

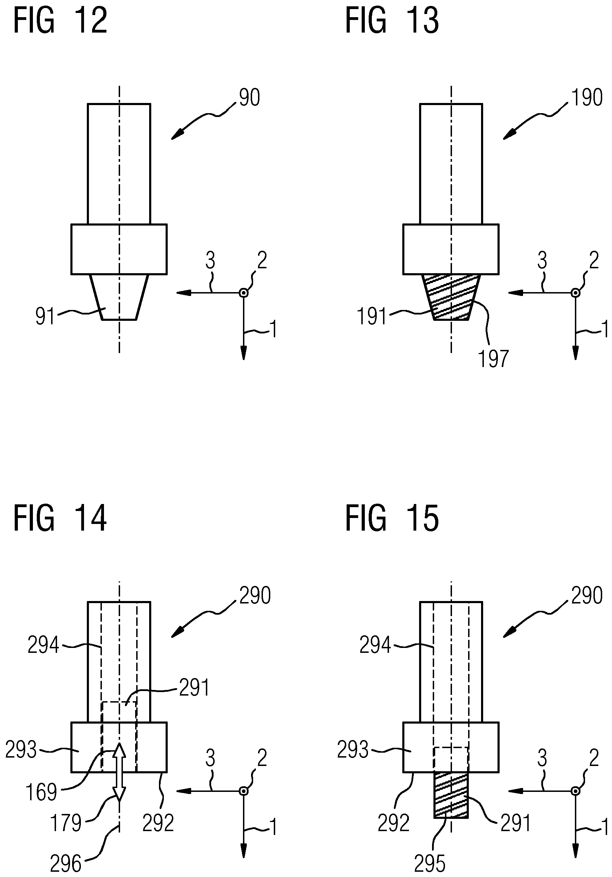

Die Figuren 12 bis 15 zeigen Ausführungsbeispiele von Werkzeugen 90,190,290 zum Formen eines Funktionsbereichs 11,111,211 mit einem reibbasierten Verfahren. Die Werkzeuge 90,290 wurden bereits in Zusammenhang mit Figuren 1 bis 11 beschrieben. Das Werkzeug 190 weist einen feststehenden Pin 191 auf, wobei dieser im Vergleich zu dem vorher beschriebenen Werkzeug 90 mit dem feststehenden Pin 91 eine Kontur 197 aufweist, die für das reibbasierte Verfahren zum Formen des Funktionsbereichs 11,111,211 optimiert ist.

Obwohl die Erfindung im Detail durch die bevorzugten Ausführungsbeispiele näher beschrieben wurde, ist sie nicht auf die offenbarten Beispiele beschränkt. Andere Variationen können vom Fachmann hieraus abgeleitet werden, ohne den Schutzumfang der beigefügten Ansprüche zu verlassen.

## Patentansprüche

1. Verfahren zur Herstellung einer elektrischen Maschine (130) mit einem Gussteil (210), welches einen metallischen Funktionsbereich (211) umfasst, der sich in einer ersten Richtung (1) von einer ersten Seite (212) zu einer zweiten Seite (213) des Gussteils (210) erstreckt, wobei das Gussteil (210) einen Umgebungsbereich (216) aufweist, der den Funktionsbereich (211) zumindest teilweise umgibt, wobei die zweite Seite (213) durch eine Ausformung (217) geformt wird, die von dem Umgebungsbereich (216) umgeben ist, wobei die Ausformung (217) gegenüber dem Umgebungsbereich (216) auf der ersten Seite (212) eine Vertiefung (218) und auf der zweiten Seite (213) eine Erhöhung (219) bildet, wobei die elektrische Maschine (130) eine weitere Komponente (131) und eine Vorrichtung (132) zum Sichern der weiteren Komponente (131) gegen Verdrehen umfasst, wobei die Vorrichtung (132) eine Verbindung (133) zwischen dem Funktionsbereich (211) des Gussteils (210) und der weiteren Komponente (131) aufweist, wobei der Funktionsbereich (211) mit einem reibbasierten Verfahren geformt wird, welches ein rotierendes Werkzeug (290) mit einem zylindrischen Hauptteil verwendet, **dadurch gekennzeichnet, dass** in dem Hauptteil ein zylindrisches Teil als Pin (291) mit einer zylindrischen Form konzentrisch zum Hauptteil (293) in einem Kanal (294) in das Hauptteil (293) in einer Richtung (169) zurückziehbar oder in einer Richtung (179) aus dem Hauptteil (293) ausfahrbar ist, wobei an der Mantelfläche des Pins (291) eine Schneidvorrichtung (295) vorhanden ist, die eine Werkzeugschneide zur spanabhebenden Bearbeitung aufweist, sodass in einer zweiten Drehrichtung (168) des Werkzeugs (290) um dessen Längsachse (296) mit dem Werkzeug (290) eine spanabhebende Bearbeitung und in der entgegengesetzten Drehrichtung (158) mit der Schneidvorrichtung (295) keine spanabhebende Bearbeitung ermöglicht ist, wobei das zylindrische Hauptteil (293) einen größeren Durchmesser als der Pin (291) aufweist, wobei das Hauptteil (293) benachbart zu dem Pin (291) eine Schulter (292) aufweist, wobei das Verfahren die folgenden Schritte umfasst:
- in Kontakt Bringen des Werkzeugs (290) mit dem Gussteil (210) zum Formen des Funktionsbereichs (211) des Gussteils (210), wobei der Pin (291) in das Hauptteil (293) zurückgezogen ist, wobei das Werkzeug in die Richtung (158) rotiert, wodurch das Material des Gussteils (210) lokal an einem Ort des zu formenden Funktionsbereichs (211) plastifiziert wird,
- Ausfahren und Eintauchen des Pins (296) in das plastifizierte Material bis zu einer Oberfläche der weiteren Komponente (131), wobei das Material des gegossenen Teils (210) durch die Schulter (292) weiterhin plastifiziert wird,
- Wechseln der Drehrichtung des Werkzeugs (290) nach dem Erreichen der Oberfläche der weiteren Komponente (131),
- Erzeugen einer Ausnehmung durch Eintauchen des Pins (291) in die weitere Komponente (131) durch spanabhebende Bearbeitung in der zweiten Drehrichtung (168), während die Schulter (292) das Material des Gussteils (210) weiterhin plastifiziert,
- Zurückziehen des Pins (291) um ein definiertes Maß nach einem Erreichen einer Endposition des Pins (291) in der ersten Richtung (1) und
- gleichzeitiges Fließen des plastifizierten Materials des Gussteils (210) und einiger der durch die spanabhebende Bearbeitung vorhandenen Späne (260) unter Einwirkung einer von der Schulter (291) in der ersten Richtung (1) wirkenden Druckkraft in einen erzeugten Freiraum der Ausnehmung (161), sodass eine Art Mischgefüge beziehungsweise Dispersionshärtung entsteht.

2. Elektrische Maschine (130) mit einem Gussteil (210), umfassend einen metallischen Funktionsbereich (211),der sich in einer ersten Richtung (1) von einer ersten Seite (212) zu einer zweiten Seite (213) des Gussteils (210) erstreckt, wobei das Gussteil (210) einen Umgebungsbereich (216) aufweist, der den Funktionsbereich (211) zumindest teilweise umgibt, wobei die zweite Seite (213) durch eine Ausformung (217) geformt ist, die von dem Umgebungsbereich (216) umgeben ist, wobei die Ausformung (217) gegenüber dem Umgebungsbereich (216) auf der ersten Seite (212) eine Vertiefung (218) und auf der zweiten Seite (213) eine Erhöhung (219) bildet, wobei die elektrische Maschine (130) eine weitere Komponente (131) und eine Vorrichtung (132) zum Sichern der weiteren Komponente (131) gegen Verdrehen umfasst, wobei die Vorrichtung (132) eine Verbindung (133) zwischen dem Funktionsbereich (211) des Gussteils (210) und der weiteren Komponente (131) aufweist, **dadurch gekennzeichnet, dass** der Funktionsbereich (211) mit einem reibbasierten Verfahren gemäß Anspruch 1 geformt ist.

## Claims

1. Method for producing an electrical machine (130) which has a cast part (210) comprising a metallic functional region (211) that extends in a first direction (1) from a first side (212) to a second side (213) of the cast part (210), wherein the cast part (210) has a surrounding region (216) which at least partially surrounds the functional region (211), wherein the second side (213) is shaped by a final shaping (217) which is surrounded by the surrounding region (216), wherein relative to the surrounding region (216) the final shaping (217) forms a depression (218) on the first side (212) and an elevation (219) on the second side (213), wherein the electrical machine (130) comprises a further component (131) and a device (132) for securing the further component (131) against twisting, wherein the device (132) comprises a connection (133) between the functional region (211) of the cast part (210) and the further component (131), wherein the functional region (211) is shaped by a friction-based process that uses a rotating tool (290) having a cylindrical main part, **characterised in that** in the main part a cylindrical part as a pin (291) having a cylindrical shape can be withdrawn into the main part (293) in a direction (169) or extended from the main part (293) in a direction (179) concentrically relative to the main part (293) in a channel (294), wherein a cutting device (295) is provided on the circumferential surface of the pin (291) and has a cutting edge for metal-cutting work, such that in a second direction of rotation (168) of the tool (290) about its longitudinal axis (296) metal-cutting work using the tool (290) is made possible and in the opposite direction of rotation (158) metal-cutting work using the cutting device (295) is not made possible, wherein the cylindrical main part (293) has a larger diameter than the pin (291), wherein the main part (293) has a shoulder (292) adjacent to the pin (291), wherein the method comprises the following steps:
- bringing the tool (290) into contact with the cast part (210) for the purpose of shaping the functional region (211) of the cast part (210), wherein the pin (291) is withdrawn into the main part (293), wherein the tool rotates in the direction (158), whereby the material of the cast part (210) is plasticised locally at a location of the functional region (211) that is to be shaped,
- extending and introducing the pin (296) into the plasticised material as far as a surface of the further component (131), wherein the material of the cast part (210) continues to be plasticised by the shoulder (292),
- changing the direction of rotation of the tool (290) after reaching the surface of the further component (131),
- creating a recess by introducing the pin (291) into the further component (131) by means of metal-cutting work in the second direction of rotation (168) while the shoulder (292) continues to plasticise the material of the cast part (210),
- withdrawing the pin (291) by a defined amount after reaching a final position of the pin (291) in the first direction (1), and
- concurrently flowing the plasticised material of the cast part (210) and some of the swarf (260) that is present as a result of the metal-cutting work, under the influence of a compressive force brought about by the shoulder (291) in the first direction (1), into a space of the recess (161) that has been created, thereby producing a type of mixed structure or dispersion hardening.

2. Electrical machine (130) which has a cast part (210) comprising a metallic functional region (211) that extends in a first direction (1) from a first side (212) to a second side (213) of the cast part (210), wherein the cast part (210) has a surrounding region (216) which at least partially surrounds the functional region (211), wherein the second side (213) is shaped by a final shaping (217) which is surrounded by the surrounding region (216), wherein relative to the surrounding region (216) the final shaping (217) forms a depression (218) on the first side (212) and an elevation (219) on the second side (213), wherein the electrical machine (130) comprises a further component (131) and a device (132) for securing the further component (131) against twisting, wherein the device (132) comprises a connection (133) between the functional region (211) of the cast part (210) and the further component (131), **characterised in that** the functional region (211) is shaped by means of a friction-based process according to claim 1.

## Revendications

1. Procédé de fabrication d'une machine (130) électrique ayant une pièce (210) de fonderie, qui comprend une partie (211) fonctionnelle métallique, s'étendant d'une première face (212) à une deuxième face (213) de la pièce (210) de fonderie, la pièce (210) de fonderie ayant une partie (216) d'entourage, qui entoure, au moins en partie, la partie (211) fonctionnelle, la deuxième face (213) étant conformée par une déformation (217) entourée de la partie (216) d'entourage, la déformation (217) formant, par rapport à la partie (216) d'entourage, sur la première face (212), une cavité (218), et sur la deuxième face (213), une surélévation (219), la machine (130) électrique comprenant un autre élément (131) et un dispositif (132) pour empêcher l'autre élément (131) de tourner, le dispositif (132) ayant une liaison (133) entre la partie (211) fonctionnelle de la pièce (210) de fonderie et l'autre élément (131), la partie (211) fonctionnelle étant conformée par un procédé à base de frottement, qui utilise un outil (290) tournant ayant une partie principale cylindrique, **caractérisé en ce que**, dans la partie principale, une partie cylindrique, sous la forme d'une broche (291) de forme cylindrique, concentriquement à la partie (293) principale, peut être retirée dans un canal (294) de la partie (293) principale dans une direction (169) ou peut être sortie de la partie (293) principale dans une direction (179), dans lequel il y a, sur la surface latérale de la broche (291), un dispositif (295) de coupe, qui a un tranchant d'outil pour l'usinage avec enlèvement de copeaux, de manière à ce que, dans un second sens (168) de rotation de l'outil (290) autour de son axe (296) longitudinal, soit possible un usinage avec enlèvement de copeaux par l'outil (290) et, dans le sens (158) de rotation contraire, un usinage avec enlèvement de copeaux ne soit pas possible par le dispositif (295) de coupe, la partie (293) principale cylindrique ayant un diamètre plus grand que la broche (291), la partie (293) principale ayant, au voisinage de la broche (291), un épaulement (292), le procédé comprenant les stades suivants :
- mise en contact de l'outil (290) avec la pièce (210) de fonderie, pour former la partie (211) fonctionnelle de la pièce (210) de fonderie, la broche (291) étant retirée dans la partie (293) principale, l'outil tournant dans le sens (158), grâce à quoi le matériau de la pièce (210) de fonderie est plastifié localement en un emplacement de la partie (211) fonctionnelle à former,
- sortie et plongée de la broche (296) dans le matériau plastifié jusqu'à une surface de l'autre élément (131), le matériau de la pièce (210) coulée continuant à être plastifié par l'épaulement (292),
- inversion du sens de rotation de l'outil (290) après que la surface de l'autre élément (131) est atteinte,
- production d'un évidement par plongée de la broche (291) dans l'autre élément (131) par usinage avec enlèvement de copeaux dans le second sens (168) de rotation, tandis que l'épaulement (292) continue à plastifier le matériau de la pièce (210) de fonderie,
- retrait de la broche (291) d'un montant défini, après atteinte d'une position finale de la broche (291) dans la première direction (1) et
- écoulement simultané du matériau plastifié de la pièce (210) de fonderie et de certains copeaux (260) obtenus par l'usinage avec enlèvement de copeaux sous l'effet d'une force de pression suivant la première direction (1) par l'épaulement (291), dans un espace libre produit de l'évidement (161), de manière à créer une sorte de texture mixte ou un durcissement de dispersion.

2. Machine (130) électrique, ayant une pièce (210) de fonderie, comprenant une partie (211) fonctionnelle métallique, qui s'étend dans une première direction (1) d'une première face (212) à une deuxième face (213) de la pièce (210) de fonderie, la pièce (210) de fonderie ayant une partie (216) d'entourage, qui entoure, au moins en partie, la partie (211) fonctionnelle, la deuxième face (213) étant formée par une déformation (217), qui est entourée de la partie (216) d'entourage, la déformation (217) formant, par rapport à la partie (216) d'entourage, sur la première face (212), un creux (218), et sur la deuxième face (213), une surélévation (219), la machine (130) électrique comprenant un autre élément (131) et un dispositif (132), pour empêcher l'autre élément (131) de tourner, le dispositif (132) ayant une liaison (133) entre la partie (211) fonctionnelle de la pièces (210) de fonderie et l'autre élément (131),
**caractérisée en ce que**
la partie (211) fonctionnelle est formée par un procédé à base de frottement suivant la revendication 1.
